# EUROPEAN PATENT APPLICATION

(11) **EP 1 564 635 A2**
(43) Date of publication of application: **17.08.2005**
(21) Application number: 05100880.3
(22) Date of filing: 09.02.2005
(51) Int. Cl.: G06F 3/12

(54) **Scalable print spooler**

(30) Priority: 13.02.2004 US 779430
(71) Applicant: MICROSOFT CORPORATION, Redmond, Washington 98052-6399 (US)
(72) Inventor: Trufinescu, Adina M., Redmond, WA 98052 (US); Sedky, Khaled S., Redmond, WA 98052 (US); Liu, Ming, Redmond, WA 98052 (US)
(74) Representative: Zimmer, Franz-Josef, Dr.

(57) **Abstract**

An exemplary scalable print spooler efficiently prints data on a printer and is most effective in use with a dedicated print server. One use of the invention is with a print server that services a large number of client computers having applications programs having a need to print data. These could include, but are not limited to, word processing applications programs. A server computer has software that implements a server print spooler for co-ordinating the printing of data sent to the print server by the client computers. A number of printers are coupled to the server computer for printing under direction of the server print spooler. Client calls to the print spooler are accomplished by asynchronous procedures that communicate by means of an remote procedure call channel. A thread pool at the print server services these calls without unreasonable context switching between client requests.

## Description

### Field of the invention

This disclosed system concerns an improved print spooler used in a client/server computing application.

### Background Art

A trend in large business organizations is to consolidate multiple print servers into a single server. Increasingly, it is a trend for a single print server to service more users and connect to more printers. Windows ® 2003 Server improved upon the scalability for example, of Windows ® 2000 Server scalability. The present invention concerns an improvement over the techniques employed by the Windows 2003 server architecture in functioning as a print server.

A common cause of scalability problems is having too many threads (or processes) competing for processor time on the server. A single central processing unit can only execute one instruction at a time. If work is handed to a background thread, it doesn't execute while the main thread or the other threads continue running. When a thread is blocked on a lock or a time slice allocation, a context switch consumes CPU resources as the thread wakes up. Often the thread is allocated a time slice only to discover it is blocked and then again immediately sleeps. This phenomenon leads to cache thrashing and inefficient cycles spent in context switching.

To give an illustration, tests were run on a server (or multiple servers) servicing 800 printers and 5000 clients. Approximately 5000 concurrent threads were spawned. Whenever a thread is created in a process, the server operating system reserves a region of the address space for the thread's stack and also commits some physical storage to this reserved region. For a print spooler running under Windows Server 2003 these parameters might be 262,144 bytes for the stack and 32,768 bytes of memory per thread on a X86 processor. For the 5000 threads, one would have committed memory of 5000*32768 = 164M. The 5000 concurrent threads are mainly concentrated in 2 places, RPC incoming calls from clients and Port threads functions. The present invention concerns an effort to reduce consumption of server resources due to both of these causes. This problem of resource allocation is also discussed in chapter 14 (Asynchronous Input/Output and Completion ports) of a text entitled "Win32 Systems Programming" Copyright 2001, Addison Wesley.

The present client print spooler in Windows 2000 and Windows XP uses remote procedure calls that communicate with the server using named pipe end points. Use of named pipes raises issues relating to both scalability and security.
- To support print notification to the client, backward channel (communications from the server to the client) for notifications is only possible by enabling the anonymous connection to the client. The server also needs to maintain those concurrent connections to all registered clients, which adversely affects the scalability of the server.
- It is not desirable to allow a large number of idle pending calls on the server. With named pipes, each client waiting for a reply will have a pending named pipe running on the server, each of which requires a certain amount of kernel memory.

The spooler interface has the following problem:
- The interfaces are mainly synchronous interfaces which prevent any thread pooling on the server side. It also affects an ability to do any asynchronous operations on the client side and affect our application response time.

A text entitled Inside Microsoft Windows 2000 (Solomon et al Microsoft Press, copyright 2000) has a chapter relating to networking. The Solomon et al text notes "In addition to the synchronous function-call based interface described here, Windows 2000 RPC also supports asynchronous RPC. Asynchronous RPC lets an RPC application execute a function but not wait until the function completes to continue processing. Instead, the application can execute other code and later when a response has arrived from the server, the RPC run time signals an event object the client associates with the asynchronous call. The client can use stand Win32 functions, such as WaitForSingleObject, to learn of the function's completion."

### Summary of the invention

An exemplary system can be used to efficiently print data on a printer and may be used in conjunction with a dedicated print server. One use of the invention is with a print server that services a large number of client computers having applications programs that may need to simultaneously to print data. These applications could include but are not limited to word processing applications programs. A server computer has software that implements a server print spooler for co-ordinating the printing of data sent to the print server by the client computers. A number of printers are coupled to the server, typically by means of a network, for printing under direction of the server print spooler.

In accordance with the exemplary system a client computer includes a client print spooler running on the client computer that transmits data to one of the printers by means of asynchronous remote procedure calls to the server print spooler. The server print spooler includes a thread manager for maintaining a thread pool for servicing pending client computer requests by communicating data to the plurality of printers.

Asynchronous remote procedure calls at the client computers reduces instances of the application programs hanging or waiting on server performance. If the print server is under heavy load the client application program may appear to have malfunctioned even though it is merely waiting on a response from the print server.

Use of a thread pool at the server tends to reduce inefficient context switches that occur in prior art print spoolers. Such context switches place a demand on server resources and result in inefficient use of print server processor time.

An exemplary system uses TCP as a transfer protocol between the client and the server. TCP is faster, has richer functionality, more scalable and robust and generally consumes less resources than named pipes. TCP works well across domains and other non-standard environments. TCP is more firewall friendly and it involves fewer components in processing its traffic.

These and other objects, advantages and features of the invention are more fully described in the following exemplary embodiment of the system which is described in conjunction with the accompanying drawings.

### Brief Description of the drawings

Figure 1 is a schematic depiction of a computer system for use in implementing an exemplary embodiment of the present invention;
Figure 2 is schematic depiction showing multiple computers networked together wherein at least one computer includes software for implementing a print spooler constructed in accordance with the invention;
Figure 3 is a schematic depiction of layered software components that implement a remote procedure call based print spooler in accordance with the invention;
Figure 4 and 4A are prior art depictions of how inter-process communications for printer notification between a client and a server print spooler works;
Figure 5 is a depiction of inter-process communications between a client and a server print spooler in accordance with an exemplary embodiment of the invention;
Figure 6 is a depiction of operation of a thread pool for servicing client requests in conformity with an exemplary embodiment of the invention; and
Figure 7 is a schematic depiction of a scheduler for adding print jobs to a thread pool for servicing print requests.

### Exemplary mode for practicing the invention

Figure 2 is a depiction of a network 10 having a plurality of workstations 11 that communicate with a server 12 by means of network communications. The server communicates with a number of printers 13 over the network for servicing print requests and also includes an interface coupled to the printer 13a by means of a parallel interface. The communications over the network is both wired by means of conventional Ethernet switches and Ethernet cards installed in the workstations and server and wireless by means of a wireless router which implements known wireless communications standards. Thus, for example, a laptop computer 14 is able to communicate with the server 12 without physically being connected to the network hardware. The workstations (or laptop) can communicate and direct a print spooler implemented on the server to print at the request of one of the applications programs executing on the workstation. A word processing application for example, communicates its requests by means of a Win32 application program interface exposed to the application by the operating system. Although Win32 is the presently preferred application interface for the Windows ® brand operating system, other means of sending requests to the server 12 are contemplated by the invention.

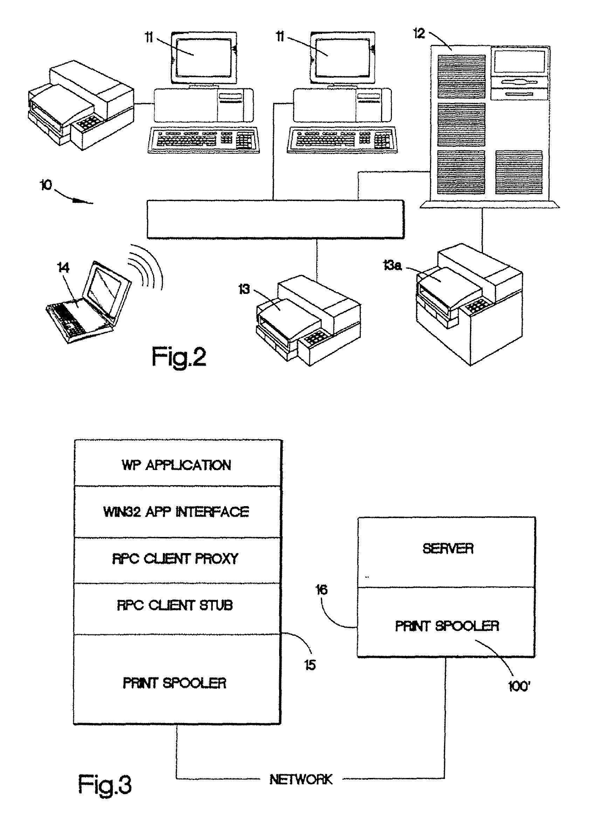

An exemplary embodiment of the invention uses a client/server model of inter-process communications for implementing a print spooler. More particularly, in one exemplary embodiment, a client process on a workstation 11 communicates by means of the network 10 with one or more print servers 12 to print in a more efficient and robust manner than the prior art printing systems. Figure 3 is a schematic depiction of the interactions of server and client that implement a remote procedure call (herein RPC) based process of queuing jobs at the print spooler. In figure 3a client 15 is seen interacting by means of a network (such as the network of Figure 2) with a server 16. In one example, the client is software is running on a workstation and the server software is software running on the server computer12 Although the server software is software running on the dedicated print server, in accordance with an exemplary embodiment of the invention the workstations also implement a print spooler which acts as a server. Thus, in another application in conformity with the client/server model, both client and server execute on the same computer. The print spooler on the workstation, for example, communicates print requests directly to a local printer using asynchronous procedure calls.

Utilization of an RPC inter-process communication allows an application executing on a local machine such as one of the workstations 11 to call a process on a remote machine such as the server 12 in Figure 2. The calling word processing program is not concerned with the fact that the printing process invokes code execution on the server. To the local application, it appears the process is running completely on the local machine. RPC provides a procedural view of networked operation rather than a transport-centered view, thus simplifying the development and deployment of distributed applications. The RPC process used in the Windows ® operating system is compatible with the Open Software Foundation distributed computing environment.

Networking software is traditionally structured around an I/O model of processing. In Windows 2000 for example, a network operation is initiated when an application issues a remote I/O request. The operating system processes the request by forwarding it to a redirector, which acts as a remote file system to make the client interaction with the remote file system invisible to the client.

Remote procedure calls (RPC) implement a slightly different approach. RPC applications are like other structured applications, which call procedures and procedure libraries to perform specific tasks. A difference however, is that the programs exposed by an interface to the applications program may call procedures that execute on a remote computer. A remote client communicates with a server by means of the network. This is contrasted with a local client that communicates with a server on the same computer.

### Computer System

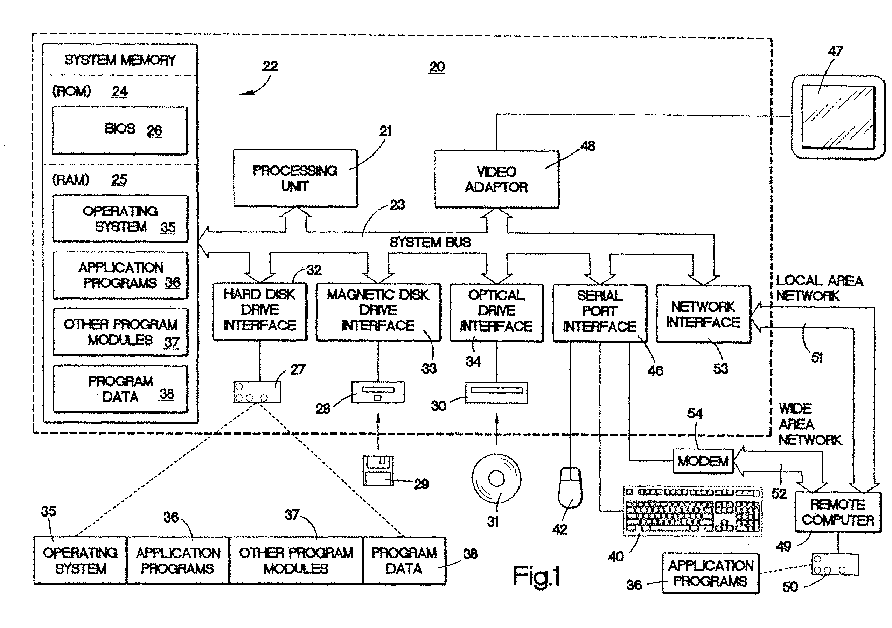

Figure 1 depicts an exemplary data processing system that could, for example, represent the structure of either a workstation 11 or a server 12 on the network 10. The system includes a general purpose computing device in the form of a conventional computer 20, including one or more processing units 21, a system memory 22, and a system bus 23 that couples various system components including the system memory to the processing unit 21. The system bus 23 may be any of several types of bus structures including a memory bus or memory controller, a peripheral bus, and a local bus using any of a variety of bus architectures.

The system memory includes read only memory (ROM) 24 and the random access memory (RAM) 25. A basic input/output system 26 (BIOS), containing the basic routines that help to transfer information between elements within the computer 20, such as during start-up, is stored in ROM 24.

The computer 20 further includes a hard disk drive 27 for reading from or writing to a hard disk, not shown; a magnetic disk drive for reading from or writing to a removable magnetic disk 29; and an optical disk drive 30 for reading from or writing to a removable optical disk 31 such as a CD ROM or other optical media. The hard disk drive 27, magnetic disk drive 28, and optical disk drive 30 are connected to the system bus 23 by a hard disk drive interface 32, a magnetic disk drive interface 33, and an optical drive interface 34, respectively. The drives and their associated computer-readable media provide nonvolatile storage of computer readable instructions, data structures, program modules and other data for the computer 20. Although the exemplary environment described herein employs a hard disk, a removable magnetic disk 29 and a removable optical disk 31, it should be appreciated by those skilled in the art that other types of computer readable media which can store data that is accessible by a computer, such as magnetic cassettes, flash memory cards, digital video disks, Bernoulli cartridges, random access memories (RAMs), read only memories (ROM), and the like, may also be used in the exemplary operating environment.

A number of program modules may be stored on the hard disk, magnetic disk 29, optical disk 31, ROM 24 or RAM 25, including an operating system 35, one or more application programs 36, other program modules 37, and program data 38. A user may enter commands and information into the computer 20 through input devices such as a keyboard 40 and pointing device 42. Other input devices (not shown) may include a microphone, joystick, game pad, satellite dish, scanner, or the like. These and other input devices are often connected to the processing unit 21 through a serial port interface 46 that is coupled to the system bus, but may be connected by other interfaces, such as a parallel port, game port or universal serial bus (USB). A monitor 47 or other type of display device is also connected to the system bus 23 via an interface, such as a video adapter 48. In addition to the monitor, personal computers (PCs) typically include other peripheral output devices (not shown), such as speakers and printers.

The computer 20 depicted in Figure 1 typically operates in a networked environment using logical connections to one or more remote computers, such as a remote computer 49. The remote computer 49 may be another PC, a server, a router, a network PC, a peer device or other common network node, and typically includes many or all of the elements described above relative to the computer 20, although only a memory storage device 50 has been illustrated in Figure 1. The logical connections depicted in Figure 1 include a local area network (LAN) 51 and a wide area network (WAN) 52. Such networking environments are commonplace in offices, enterprise-wide computer networks, intranets and the Internet.

When used in a LAN networking environment, the computer 20 is connected to the local network 51 through a network interface or adapter 53. When used in a WAN networking environment, the computer 20 typically includes a modem 54 and other means for establishing communications over the WAN 52, such as the Internet. The modem 54, which may be internal or external, is connected to the system bus 23 via the serial port interface 46. In a networked environment, program modules depicted relative to the computer 20, or portions thereof, may be stored in the remote memory storage device. It will be appreciated that the network connections shown are exemplary and other means of establishing a communications link between the computers may be used.

In the Windows 2000 (and later versions) operating system environment, to write an RPC application, the operating system programmer decides which procedures will execute locally and which will execute remotely. As an application runs, it calls local procedures as well as procedures that aren't present on the local machine. To handle the latter case, the application is linked to a local static-link library or DLL that contains stub procedures, one for each remote procedure. The stub procedures have the same name and use the same interface as the remote procedures, but instead of performing the required operations, the stub takes the parameters passed to it and marshals them for transmission across the network. The process of marshaling parameters means ordering and packaging the parameters in a particular way to suit the network link, such as resolving references and picking up a copy of any data structures that a pointer refers to.

The stub then calls RPC run-time procedures that locate the computer where the remote procedure resides, determine which transport mechanism to use, and sends the request to the local transport software for transmission to the remote server. When the remote server receives the RPC request, it unmarshals the parameters, reconstructs the original procedure call, and calls the procedure. When the server finishes servicing the client call, it performs the reverse sequence and returns results to the caller. In the Windows ® operating system environment, the process of creating an RPC application is simplified by a Microsoft Interface Definition Language compiler. The IDL file is compiled and produces both client side and server side stub routines, as well as header files to be included in the application. A programmer wanting to call an existing RPC application need only write the client side of the software and link the application to the local RPC run-time facility.

The Windows 2000 networking services presently include RPC applications which include network transport provider DLLs for named pipes, NetBIOS, and TCP/IP. The servers such as the server 12 on the network 10 that service the requests of the clients make their existence known on the network by means of an Active Directory (TM).

### Server Thread Pools

A print spooler 100 (implemented in software executing on the server 12) responds to multiple client requests (potentially thousands of such requests simultaneously) by maintaining a thread pool 202 for servicing those requests. Unlike the prior art, which assigned a server thread for every client print request, in accordance with an exemplary embodiment of the present invention, a thread pool is maintained which can respond to multiple client print requests in an efficient fashion without unreasonable demands on server resources.

The exemplary RPC based print spooler includes a scheduler 204 which extracts jobs from the first thread pool 202a and implements a second thread pool 202b that is based on a completion port 210 on the server. A completion port is a set of overlapped handles and threads that wait on the port. A single Win32 interface function CreateIOCompletionPort is used to both create the port and add handles to the port.

For each incoming asynchronous printer function, the spooler 100' will add an item into a queue served by the thread. Then that asynchronous printer function will return immediately to the client. The spooler 100' has a certain number of worker threads to service the requests that are queued up from the scheduler 204, when one thread finishes processing one request in the queue of such requests the result will be sent to the client by means of the asynchronous RPC complete call function. That thread will then pick up the next item from the queue and process its request. Dependent on the size of the queue, the number of threads in the thread pool might increase or decrease to manage the load.

Implementing a high-performance server print spooler requires implementing an efficient threading model. Having either too few or too many print spooler threads to process client requests can lead to performance problems. A goal of an exemplary embodiment of the print spooler is to incur as few context switches as possible by having its threads avoid unnecessary blocking, while at the same time maximizing parallelism among multiple active threads.

An exemplary print spooler 100' uses the I/O completion executive object 210, which is exported to Win32 as a completion port, as the focal point for completion of printing jobs handed to the spooler 100 by the various client processes requesting print services.

Unfortunately, some of the functions implemented by the print spooler 100 are not finished quickly due to various reasons. These include the global registry lock and calling other slow functions. When those functions block, the RPC runtime that maintains the thread pool 106 will create another thread to serve a new incoming client sent by the scheduler.

In accordance with the invention, functions that take a long time to be serviced by the server are identified and they are changed to execute asynchronously at the client. Analysis of prior art systems has provided data from functions NOT originating from the spooler itself that take a long time to finish. Identifying these functions is one manner to choose which functions to implement as asynchronous interface methods at the client.

In the exemplary system, a new interface is implemented in parallel with the prior art winspool interface. In implementing the new interface, some functions are asynchronous, and some functions are synchronous. The new interface has both asynchronous and synchronous functions and runs side by side with the old synchronous interface which uses named pipes as its transport protocol. Different method names are used to avoid name collision.

### TCP/IP transport and security model

Named pipes that were used as a transport protocol in a prior art print spooler have a static endpoint. The exemplary embodiment of the invention does not use named pipes and instead relies on a tcp/ip transfer protocol for transfers between client and servers running on different machines such as the workstation 11 and server 12 of Figure 2. Although a presently preferred embodiment of the invention uses TCP/IP other embodiments could use other transfer protocols such as hypertext transfer protocol (http) or the like.

For tcp/ip, the exemplary system uses dynamic endpoints. The server side registers a protocol sequence and then obtains a binding vector. Finally, the server registers the endpoint.

To ensure a process be called only on a specific protocol sequence, the exemplary system registers a security callback function, and in that function, checks on which protocol sequence the call is made.

Currently Windows ® RPC provides the SSPI(Security Support Provider Interface) based security model, which provides high levels of security and is utilized by the exemplary embodiment of the invention.

The exemplary system creates a thread pool in the server print spooler. Each incoming asynchronous function call causes the spooler to place a work item in the thread pool 202a and returns to the client immediately. The work item will be scheduled and executed at a later time by a second thread pool 202b. The print spooler queues the work items in the thread pool.

### Client calls to the asynchronous methods

The local client calls the new asynchronous interface methods thereby exposing asynchronous public APIs to applications such as a word processing program. The spooler client also calls the new asynchronous method, thus exposing some asynchronous method API's to the application program. For example, a word processing program can call the exemplary asynchronous method such as the asynchronous version of GetPrinterData, to check the status of certain printer. That function will go through the spooler client in the local machine and the spooler in the remote server machine. In the server spooler, it essentially adds a service request in the spooler worker thread pool 202a and returns to the word processing program immediately. The word processing program can then proceed to do other tasks, and it will be notified later when the printer data is ready to pick up.

The prior art printer notification is complex. If the application, for example, wants to monitor a printer status change to determine for example if a job has finished, it calls a function Find First Printer Change Notification (herein FFPCN). This function wil call the spooler and the spooler sets up a communication channel with the server. At a later time, when an event the word processing program is interested in monitoring occurs, the server spooler sends the event change notice back to the spooler client. The set up and maintenance of this communications channel consumes a large amount of resources in the server and prevents the server spooler from efficiently handling a large number of clients simultaneously.

In the prior art design, the server continuously sends the change data to the client through a back channel. The winspool client caches the change data until a next call to the function FFPCN. If asynchronous RPC is used, the change data is wrapped in the asynchronous call completing data and the client will issue another asynchronous RPC call to the printer for more notification data when the previous asynchronous RPC call is complete.

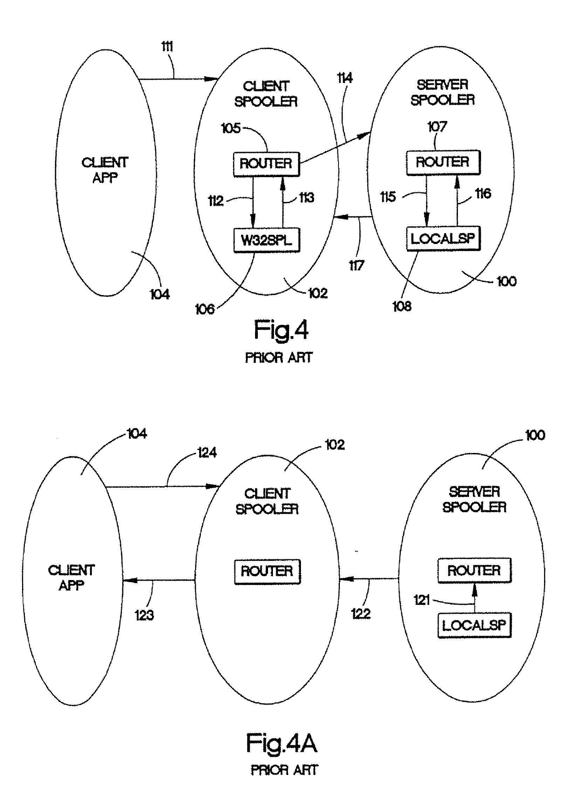

Figure 4 summarizes a prior art version of the FFPCN function.
Step 111: A client application 104 calls a function
   RpcClientFindFirstPrinterChangeNotification.
Step 112: The client spooler router 105 runs a function
   RouterFindFirstPrinterChangeNotification calls the function
   RemoteFindFirstPrinterChangeNotification of a win32 provider 106.
Step 113: The Win32 provider will call router function
   CallRouterFindFirstPrinterChangeNotification.
Step 114: The client spooler router calls
   RpcRemoteFindFirstPrinterChangeNotificationEx on the remote spooler 100.
Step 115: A remote spooler router 107 function
   RemoteFindFirstPrinterChangeNotification calls
   LocalFindFirstPrinterChangeNotification of the localspl provider 108.
Step 116: The localspl calls a router function SetupReplyNotification
Step 117: The router function SetupReplyNotification calls RpcReplyOpenPrinter on the client spooler to setup the back channel for notification.
   If something is changed on the local spooler, the local spooler notifies the client as summarized in Figure 4A:
Step 121: localspl call SetPrinterChange which will call remote spooler router function PartialReplyPrinterChangeNotification
Step 122: PartialReplyPrinterChangeNotification will accumulate the change, another thread ThreadNotifyProcessJob will call RpcRouterReplyPrinter to the client spooler.
Step 123: The client spooler of RpcRouterReplyPrinter will call router function RouterReplyPrinter->ReplyPrinterChangeNotificationWorker-->ThreadNotify. ReplyPrinterChangeNotificationWorker will call SetEvent(pChange->hEvent) to wake up the client.
Step 124: The client application will call RpcFindNextPrinterChangeNotification.
Step 125: It will call router function RouterFindNextPrinterChangeNotification which will fill up the notification data to the client and reset to listen state.

This summarization of the prior art print spooler helps identify problems with the prior art implementation of the function FFPCN. The server 100 needs to setup a channel for any listening client. This is a scalability concern as each channel will consume a certain amount of kernel memory on the server print spooler 100. The server will first try to connect to a client using SYSTEM and then try to use the client network credential. In Windows NT4, the SYSTEM is a NULL credential on the network and in Windows 2000 and above it is domain\machine principle credential. The client network credential is the NULL credential unless delegation is enabled. To be able to make this back channel work, write permission is granted to all anonymous users when creating the named pipe.

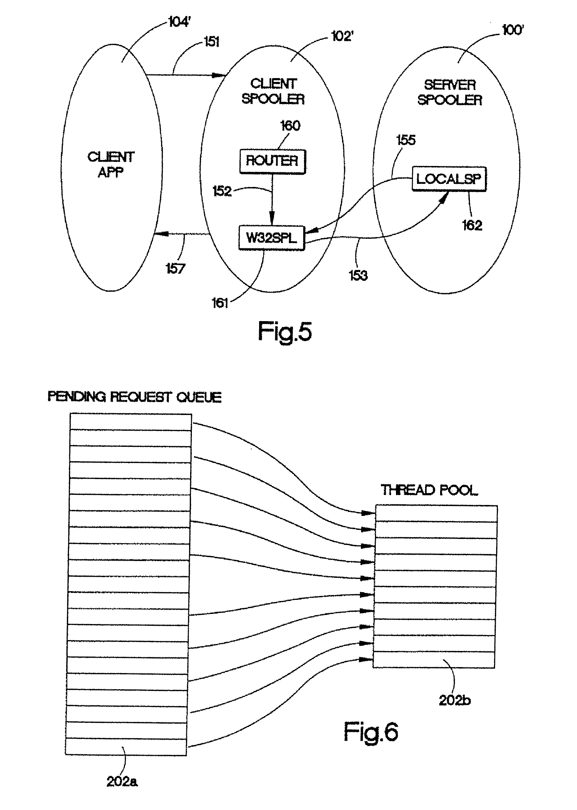

The asynchronous RPC of the exemplary embodiment of the invention is summarized in Figure 5. The steps are:
Step 151: The client application 104'calls 151 the function
   RpcClientFindFirstPrinterChangeNotificatian().
Step 152: A router 160 in the client spooler will create an event, dispatch the call to win32spl provider 161.
Step 153: The win32spl provider 161 will make the async
   RpcAsyncFindFirstFrinterChangeNotification() call to the remote spooler 100'.
Step 154: A localspl 162 in the remote spooler monitors the change.
Step 155: Once a change is detected, it will call RpcAsyncCompleteCall to finish the async call in step 153.
Step 156: In win32spl provider, when it receives the finished call, it will set the event, and repeat the step 153 to step 155.
Step 157: When the client calls RpcFindNextPrinterChangeNotification(), the local spooler will send back the cached change information.

Using the asynchronous RPC for the printer notification, greatly simplifies the process of sending change data to the client application. The word processing program can call the new change notification API. That call is asynchronous, which means it returns quickly to the application. When the event the word processing program is interested in occurs, the server print spooler 100' will finish that pending asynchronous method call. The spooler client will get notification data from the completed asynchronous call and deliver to the processing program and it will call the server spooler with the same function again to get more change data. Basically, the finish phase of the asynchronous method is used to carry the change notification data and a loop of asynchronous method calls are made to continuously monitor the printer object changes.

### Port Thread Scalability Improvements

At the server print spooler 100' a completion port thread 210 is created in a function CreatePortThread when the completion port receives a first job and is destroyed by DestroyPortThread when there is no job pending. It wakes up by SetEvent(pIniPort->Semaphore) when the new job is ready to print. The port thread will call the print processor which in turn loads a GDI and printer driver to render the print job (convert them to the printer language). This step is CPU intensive.

The sequence for a print job at the server print spooler 100' is as follows:

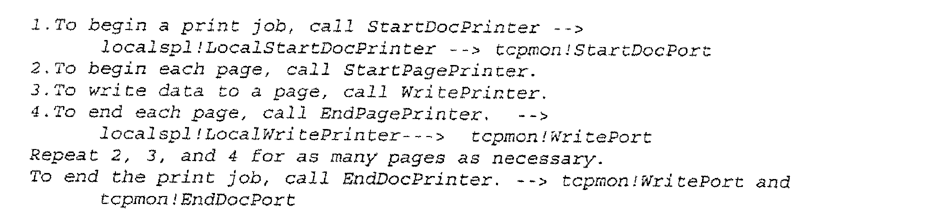

### Reduce threads -- Use thread pool to schedule printing jobs

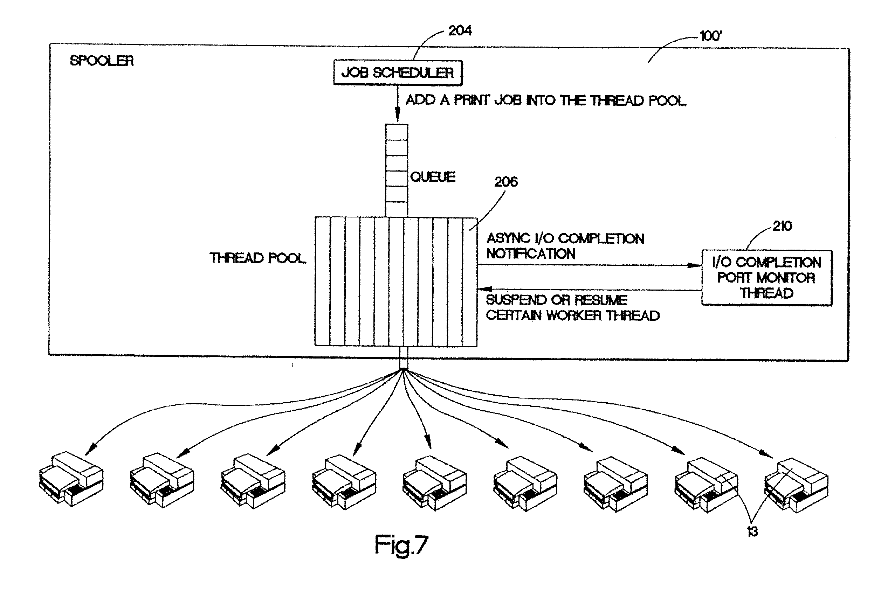

The print spooler 100' implements a scheduler 204 which starts a new job. The scheduler calls a function QucueUserWorkItem to place a job (workitem) into a second port thread pool 206 (See Figure 7).

A tcpip monitor connects to a printer 13 for servicing a job. Tcpmon'StartDocPort returns a special error when *connect* fails. The scheduler 204 recycles the work item if StartDocPort fails and to trys the workitem (restarts the job) at the later time.

Another optimization for *connect* is if there is another job pending, the print spooler can reuse the established connection between the server and printer.

A concern addressed by the exemplary embodiment of the invention is that long printer jobs in the threadpool 206 will take a long time to finish and it will effectively block the other printer jobs in the thread pool 206. The thread pool implementation creates additional worker threads if the running threads take too long to address this concern.

### Avoid I/O blocking

As discussed above, the spooler creates a work item for each ready job. If the server is connected to 1000 printers, there will be a maximum of 1000 work items, which translates to much smaller number of threads to serve the work items in the port thread pool 206.

As for each work item, the thread pool 206 is implemented in a straightforward way as:

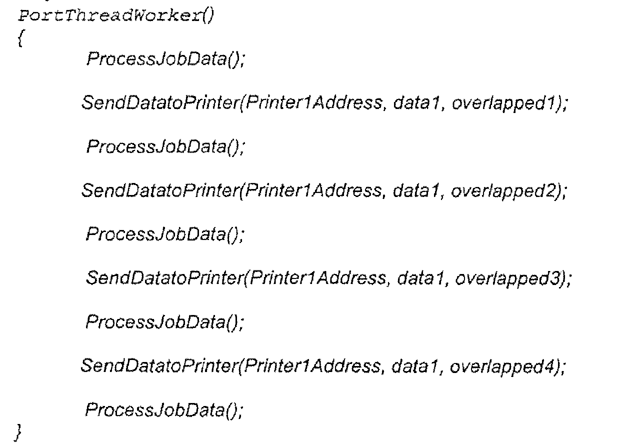

For the exemplary tcpip monitor, for each tcpmon!WritePort, the spooler will return until the overlapped SendDatatoPrinter function is finished.

ProcessJobData() means some CPU intensive rendering work. To improve the network throughput, the exemplary embodiment uses the IO completion port 210 to pick up the async IO notification. This results in a threshold on the number of the outstanding async IO calls per work item. When that threshold is reached, the thread enters into a wait state. By doing this, the thread work item in the port pool 206 can continue rendering the page without any block until the threshold is reached.

The exemplary system uses a windows socket function TransmitFile for raw data transfer. The I/O completion port will pick up the notification of an overlapped
*TransmitFile call.*

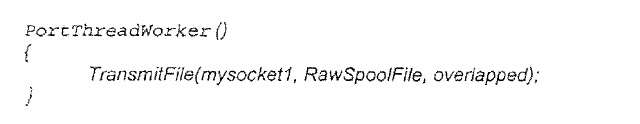

### Create I/O Completion Port thread infrastructure

The I/O completion port thread manages all work items overlapped call status.

When localspl initializes (or other times), it will create the IOCompletion port. It also starts the *AsyncIoNocifyThread* threads. The exemplary embodiment uses one concurrent worker thread per CPU of the server.

The I/O completion port thread performs these functions: 1. accept the notification from asynchronous WSASend/TransmitFiles. 2. Free or resend if WSASend/TransmitFile succeeds or fails. And 3. Watch the outstanding asynchronous IO for each port.

When the server is ready to start to print a scheduled job, the localspl 162 (Figure 5) calls tpcmon!StartDocPort and passes in the Completion Port. Inside the tcpip monitor, a socket will be created and associated with the io completion port. The tcpip monitor associates a socket with I/O completion port.

### Use overlapped TransmitFile to send raw job

An exemplary embodiment includes changes in a tcpip monitor program, a print processor program and a localspl 162 program in the server. A prior art way of handling raw data has a large overhead. The exemplary embodiment calls overlapped TransmitFile to send the raw job.

This avoids the overhead of repeatedly reading a file, writing to memory and sending data to the printer. And, it will be expected to improve the throughput, especially with the client side rendering.

An additional method is needed: :

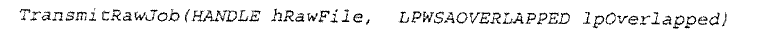

### Use overlapped WSASend to send other jobs

In the tcpipmon!WritePort, the scheduler 204 will call WSASend with the per-io data.
The perIoData includes a counter for the WSASend sequence. And, when EndDocPort() is called, it can return the number of WSASend calls back to the spooler 100'. The Spooler can use that number to track whether a job is completely sent or not.

When one job is finished on one port, the scheduler 204 needs to make sure all the outstanding overlapped I/O are successfully finished before dispatching the next job on this port. Otherwise it needs to restart the job. Also, in localspl!localwritePrinter, becore calling tcpip!writeport, the scheduler 204 must assure the number of pending jobs does not exceed a threshold.

Additionally, the scheduler keeps a list of free memory and locked memory to be used in the asynchronous I/O.

The scheduler needs add addition method called WritePortEx. It had an additional parameter called LPWSAOVERLAPPED lpOverlapped so that the localspl 162 can pass in the per-io data (for example, the sequence number of the WSASend).

In the port thread 206, finding a good number for a threshold of outstanding asynchronous I/O requests is an adjustable parameter. This depends on many factors. If the threshold is set too low, the thread pool 206 might always block and wait for the data to be sent. If the threshold is set too high, the rendering code can keep running without any block, but more memory is needed to hold the pending I/O data, and more noon-paged pool will allocated to track the pending I/O operations. A value of 2-8 for this threshold is the suggested number to use, and the best result will vary depending on LAN speed, data producing speed, data consuming speed etc.

To avoid too many pending I/O requests, we can also combine with the following optimization whose pseudo-code is as follows.

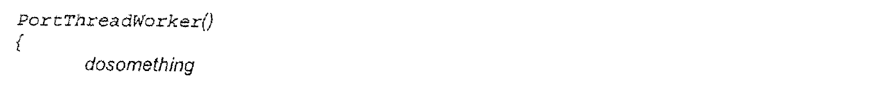

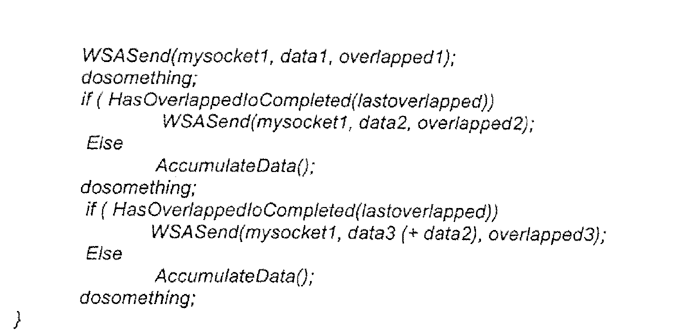

This technique can't totally replace the I/O completion port, because in the case the I/O data consumption it can't catch up the data production (that is why overlapped multiple I/O is needed), it has a gap in I/O that is not fulfilled with pending data.

It is understood that although the invention has been described with a degree of particularity, it is the intent that the invention include all modifications and alterations in the disclosed design falling within the spirit or scope of the pending claims.

## Claims

1. A system for printing data on a printer comprising:
a) one or more clients that include applications programs having a print capability;
b) a server that implements a server print spooler for co-ordinating the printing of data communicated to said server by the one or more clients; and
c) one or more printers coupled to the server for printing under direction of the server print spooler; wherein
d) a client includes a client print spooler running that communicates with at least one of said one or more printers by asynchronous remote procedure calls to the server print spooler.

2. The system of claim 1 wherein said server spooler includes a thread manager for maintaining a thread pool for servicing pending client print requests by communicating data to the plurality of printers.

3. The system of claim 1 wherein the server print spooler implements a completion port wherein incoming print requests from the clients are added to the completion port.

4. The system of claim 1 wherein the server print spooler maintains a list of print requests awaiting servicing and wherein the list of print requests are added to a thread pool that shares processor time of the server.

5. The system of claim 4 wherein multiple thread pools are created to service the print request and each thread pool is serviced by a single processor thread.

6. The system of claim 1 wherein the client print spooler implements certain procedures asynchronously and some of said procedures are implemented in a synchronous manner.

7. The system of claim 1 wherein the clients send data to the server print spooler in multiple asynchronous requests until an entire print job is completed.

8. The system of claim 1 additionally comprising a scheduler for sending print requests to a thread pool for processing.

9. The system of claim 8 wherein the scheduler chooses print requests from a first print processing thread pool and adds to a second print processing thread pool.

10. The system of claim 8 wherein the scheduler sends raw data to the thread pool in an overlapped manner.

11. A method of printing data originating from a plurality of clients on a plurality of printers comprising:
a) providing a print spooler interface for an application to communicate with a client which in turn communicates with a print server; said print spooler interface enabling the one or more applications to call a service routine on the print server by means of an asynchronous remote procedure call originating with the one or more applications; and
b) implementing a scheduler on the print server computer that responds to the request from the client for print services by allocating print server run time amongst print requests sent to the server by one or more computer applications.

12. The method of claim 11 wherein the scheduler implements one or more thread pools to service print requests from the multiple computer applications.

13. The method of claim 12 wherein the one or more thread pools are implemented by a completion port wherein incoming print requests from the client computers are added to the completion port.

14. The method of claim 11 wherein the print server maintains a list of print requests awaiting servicing and wherein the list of print requests are added to a thread pool that shares processor time of the a print server computer.

15. The method of claim 14 wherein multiple thread pools are created to service the print requests and each thread pool is serviced by a single processor thread.

16. The method of claim 11 wherein the client print spooler interface implements certain procedures asynchronously and some of said procedures are implemented in a synchronous manner.

17. The method of claim 11 wherein the client request a print job made up of multiple print requests which are sequentially communicated to the print server computer in multiple asynchronous remote procedure calls.

18. The method of claim 11 wherein a scheduler sends print requests to a thread pool for processing.

19. The method of claim 18 wherein the scheduler chooses print requests from a first print processing thread pool and adds the requests to a second print processing thread pool.

20. A method in a client/server computing system, the method for implementing a server print spooler comprising:
a) receiving asynchronous client print requests by means of a communications channel that conveys print requests to a server print spooler;
b) placing the client print requests into a queue of such print requests; and
c) scheduling print output from a subset of said print requests at a selected print location by placing the subset of said print requests in a thread pool serviced by a processor thread which switches between servicing the print requests in the thread pool.

21. A computer readable medium for implementing a print spooler for printing data originating from a plurality of clients on a plurality of printers comprising instructions for:
a) providing a print spooler interface for a computer application to communicate with a server; said print spooler interface enabling the one or more applications to call a service routine on a print server by means of an asynchronous remote procedure call originating with said application; and
b) implementing a scheduler on the print server that responds to the request from the client for print services to allocate server run time amongst print requests sent to the server by multiple computer applications.

22. The computer readable medium of claim 21 wherein the thread pool is implemented by a completion port wherein incoming print requests from a client are added to the completion port.

23. The computer readable medium of claim 21 wherein the print server maintains a list of print requests awaiting servicing and wherein the list of print requests are added to a thread pool that shares processor time of the server.

24. The computer readable medium of claim 23 wherein multiple thread pools are created to service the print requests and each thread pool is serviced by a single processor thread.

25. The computer readable medium of claim 21 wherein the print spooler interface implements certain procedures asynchronously and some of said procedures are implemented in a synchronous manner.

26. The computer readable medium of claim 21 wherein a print job made up of multiple print requests which are sequentially communicated to the print server in multiple asynchronous remote procedure calls.

27. The computer readable medium of claim 21 wherein a scheduler sends print requests to a thread pool for processing.

28. The computer readable medium of claim 27 wherein the scheduler chooses print requests from a first print processing thread pool and adds the requests to a second print processing thread pool.
